# EUROPEAN PATENT SPECIFICATION

(11) **EP 4 279 234 B1**
(45) Date of publication and mention of the grant of the patent: **19.11.2025**
(21) Application number: 23173661.2
(22) Date of filing: 16.05.2023
(51) Int. Cl.: B27B 31/08, B27B 31/00, B65G 19/20, B65G 37/00

(54) **SCRAPER CONVEYOR AND METHOD FOR TRANSVERSE TRANSPORT OF SAWN TIMBERS**
KRATZFÖRDERER UND VERFAHREN ZUM QUERTRANSPORT VON SCHNITTHÖLZERN
CONVOYEUR À RACLETTES ET PROCÉDÉ DE TRANSPORT TRANSVERSAL DE BOIS DE SCIAGE

(30) Priority: 20.05.2022 FI 20225446
(43) Date of publication of application: 22.11.2023
(73) Proprietor: Pronor Mechanic Oy, 15860 Hollola (FI)
(72) Inventor: Jokinen, Jari, 16710 Hollola (FI)
(74) Representative: Genip Oy

(56) References cited:
- CA-A1- 2 851 910
- GB-A- 1 382 180
- SE-C2- 505 310
- US-A- 4 281 696
- US-A1- 2010 307 890

## Description

### Field of the invention

The invention relates to a scraper conveyor for transverse transport of sawn timbers according to the preamble of the first independent claim.

The invention further relates to a method according to the second independent claim.

### Technical background

In the sawmill industry, sawn timbers are handled to an ever increasing degree by automation. This achieves significant advantages in both saved labour costs and enhanced production capacity. An important portion of the automated handling of timber products is its transport and handling speed. Increasing handling speed requires, however, increased precision from the transport apparatus.

From patent publication FI90228B is known a chain conveyor, the width of which is adjustable. Substantially related to the solution is that the actual conveyor scraper is articulated. Patent publication FI105908 also discloses a scraper conveyor, in which the width of at least one conveyor scraper is adjustable. Common to these is thus adjustability in relation to the direction of transport, and the transport of timber products longitudinally in relation to the direction of transport.

Finnish utility model publication FI10173U discloses a scraper conveyor for transverse transport of timber, comprising a conveyor frame, on the guides of the upper frame of which are arranged to travel two or more parallel conveyor chains, to each of which is coupled, at equal distances, barriers of the conveyor chain, which rise from the upper level of the conveyor.

Publication SE 505 310 C2 discloses a scraper conveyor according to the preamble of claim 1, a corresponding method according the preamble of claim 11, and in particular discloses a scraper conveyor for transverse transport of sawn pieces of wood, comprising parallel chains, which are arranged in normal use to be moved at the same speed in relation to each other, on which chains are arranged conveyor scrapers, forming, in relation to the longitudinal direction of the chains, transverse scraper rows at a predetermined distance from each other in the longitudinal direction. The device consists of several parallel chains in which the position of one chain on the edge can be changed in relation to the common position of the other chains.

The scraper conveyor must be able to transport sawn timbers of different widths, in which then the dimension of the sawn timber in the longitudinal direction of the conveyor varies. The problem with known scraper conveyors is i.a. that operation of the conveyor at high capacity can become unreliable, when it becomes necessary to transport several sawn timbers by the same scraper, or it becomes necessary to increase transport speed. This causes problems, i.a. instability in the movement of sawn timbers and increased mechanical stress of the conveyor.

### Description of the invention

The object of the invention is to provide such a scraper conveyor for transverse transport of sawn timbers, and a method for transporting sawn timbers, by which the transport of sawn timbers is carried out reliably and by which the transport capacity can also be increased.

The objects of the invention are primarily achieved as disclosed in the independent claims. Further characterizing features of the invention will be apparent from the appended claims and from the following description of the embodiments of the figures.

According to the invention, the scraper conveyor for transverse transport of sawn timbers comprises parallel chains, which are arranged in normal use to be moved at the same speed in relation to each other during transport. On the chains are arranged conveyor scrapers, forming, in relation to the longitudinal direction of the chains, transverse scraper rows at a predetermined distance from each other in the longitudinal direction. The number of scraper rows on the conveyor is variable by positioning the chains into different positions in relation to each other.

This achieves numerous advantages. When the same scraper conveyor can be used with different numbers of scraper rows, the transport capacity of sawn timbers can be changed without changing the chain speed of the conveyor, and, at the same time, each sawn timber is also supported by the scrapers, and the sawn timbers are not against each other during transport. As an example of the technical effect, a situation can be considered where, in normal use, in the first operating mode of the conveyor, the width of the sawn timber would be such that between two scraper rows could be distributed two sawn timbers. Instead of this, by the present invention it is possible by changing the positioning of the chains to increase the number of scraper rows, wherein it is possible to transport at least twice the amount of sawn timbers without increasing the speed of the conveyor or compromising the controllability of the transport.

According to one embodiment, each chain of the scraper conveyor is coupled to the drive apparatus for moving the chain, and that the drive apparatus comprises an arrangement for changing the relative positions of the chains.

In this manner, it is achieved i.a. that a change in the number of scraper rows by changing the relative positions of the chains can be implemented in a simple manner by setting the relative positions of the chains by the drive apparatus, by adjusting it, or by changing its settings.

According to one embodiment, the positioning comprises a first operating mode, in which, in the scraper rows, each parallel chain has a scraper, and a second operating mode, in which, in the scraper rows, at least one scraper pair belonging to a scraper row is arranged on the conveyor chains such that, between the scrapers of the scraper row, there is at least one conveyor chain without a scraper belonging to said scraper row.

In this manner, it is achieved in a simple manner that, in the second operating mode, more scraper rows can be formed by means of the existing chains equipped with a given scraper pitch.

According to one embodiment, in the first operating mode, the conveyor chains can be positioned in relation to each other such that, in the scraper rows, at least two scraper pairs belonging to the scraper row are arranged such that, between the scraper pair, there is at least one chain without a scraper belonging to said scraper row.

In this manner, the scrapers are evenly distributed in the scraper rows both in the first operating mode and in the second operating mode.

According to one embodiment, the scraper conveyor comprises at least a first scraper row and a second scraper row, in which scraper rows the scrapers are arranged, in the first operating mode, on every other chain in the transverse direction.

In this manner, the scrapers are quite evenly distributed in the scraper rows both in the first operating mode and in the second operating mode, and the sawn timber is safely supported during transport.

According to one embodiment, the chains of the scraper conveyor are arranged into groups in the transverse direction such that the distance between the groups is greater than the distance between the chains in the group, and that, in each group, in the second operating mode, there are only fewer scrapers than chains at one scraper row.

This feature also enhances the even support of sawn timbers in the longitudinal direction of the sawn timber during transport in the different operating modes of the conveyor.

According to one embodiment, the chains of the scraper conveyor are arranged into pairs in the transverse direction such that the distance between the pairs is greater than the distance between the chains of the pair, and that, in each pair, there is only one conveyor scraper at one scraper row.

This feature also further enhances the even support of sawn timbers in the longitudinal direction of the sawn timber during transport in the different operating modes of the conveyor.

According to one embodiment, an arrangement for changing the relative longitudinal positions of the chains comprises a mechanical arrangement enabling phase difference.

A mechanically implemented increase in the number of scraper rows is a robust solution connected with no risk, for example, of disturbances in the electronic control.

According to one embodiment, an arrangement for changing the relative longitudinal positions of the chains comprises, in connection with the drive controller included in the drive apparatus, programmatic instructions creating a phase difference, which when run by the control system included in the controller, cause the relative longitudinal positions of the chains to change.

This is again a very flexible and preferred manner of implementing the change in the number of scraper rows, in practice, by merely programmatic means.

According to one embodiment, the conveyor comprises at least a first and a second drive shaft adapted to move the chains, and the sprockets supported by the shafts, wherein the first group of sprockets is rotatably coupled to the first drive shaft and force-transmittingly coupled to the second drive shaft, and the second group of sprockets is rotatably coupled to the second drive shaft and force-transmittingly coupled to the first drive shaft.

With such a solution is achieved a very compact and reliably operating conveyor, in which the number of scraper rows can optionally be set into a first or a second operating mode, in which there are a different number of scraper rows.

According to the invention, there is also provided a method for transporting timber products on a scraper conveyor comprising parallel chains, which are arranged in normal use to be moved at the same speed in relation to each other, on which chains are arranged conveyor scrapers, forming, in relation to the longitudinal direction of the chains, transverse scraper rows at a predetermined distance from each other in the longitudinal direction, the number of scraper rows is changed by positioning the chains into different positions in relation to each other.

According to one embodiment, the method comprises a running mode, in which the conveyor is used such that an individual sawn timber is supported during transport by such a number of scrapers, which is less than the number of parallel chains, or such that an individual sawn timber is supported during transport by such a number of scrapers, which is equal to the number of parallel chains.

According to one aspect of the invention, at its simplest, the number of scraper rows can be changed by manually moving a portion of the chains to a different position in relation to the sprocket.

In connection with this application, the term "sawn timber" means mainly elongated pieces made from timber, such as boards, planks, slats or corresponding, which are sawn on at least two sides in the longitudinal direction.

### List of drawings

The invention and its operation are explained below with reference to the accompanying schematic drawings, in which
- Fig. 1: shows a schematic lateral view of a scraper conveyor according to one embodiment of the invention,
- Fig. 2: shows a schematic top view of the scraper conveyor of Fig. 1 in the first operating mode,
- Fig. 3: shows a schematic top view of the scraper conveyor of Fig. 1 in the second operating mode,
- Fig. 4: shows schematically the first and second operating modes of the conveyor,
- Fig. 5: shows schematically a scraper conveyor according to the invention,
- Fig. 6: shows schematically an embodiment of an arrangement for changing the relative positions of the chains, and
- Fig. 7: shows schematically another embodiment of an arrangement for changing the relative positions of the chains.

### Description of the drawings

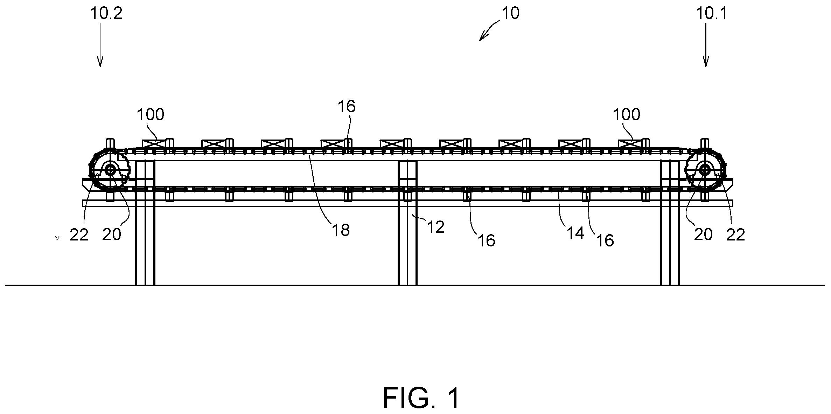

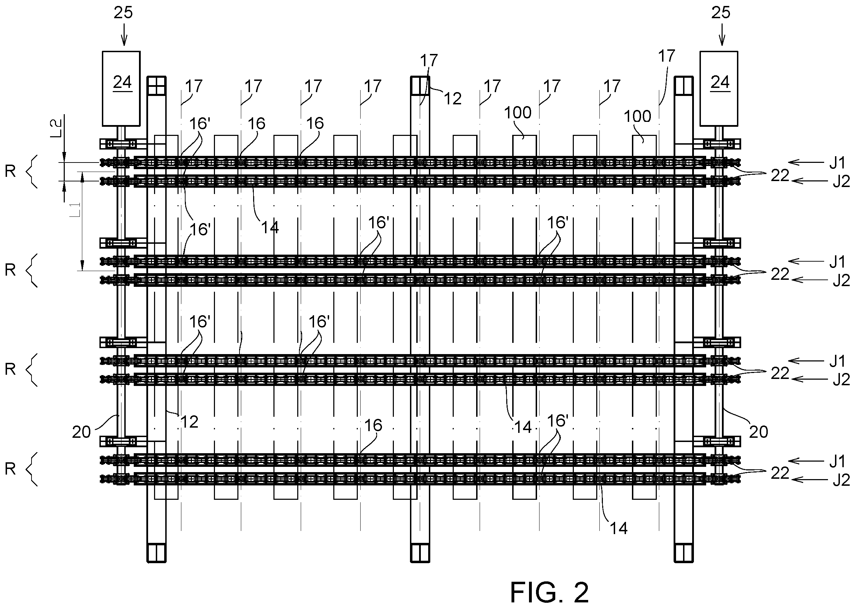

Figs. 1 and 2 show quite schematically an embodiment of a scraper conveyor according to the invention, which is intended for transverse transport of sawn timbers. The figures show only such parts or features of the scraper conveyor, which are necessary for understanding the features and operation of a conveyor according to the invention. Fig. 1 shows a lateral view of the scraper conveyor 10, and Fig. 2 shows a view as seen from above. The scraper conveyor 10 is intended for transporting sawn timbers from the first end 10.1 of the conveyor to the second end 10.2 of the conveyor. The scraper conveyor comprises a frame 12, onto which are fitted a desired number of conveyor chains 14 as endless chain links. On each chain 14 are arranged conveyor scrapers 16 at even intervals, at a predetermined distance from each other, to the outer side of the chain link, on the transporting portion above the chain link. The scrapers 16 on the parallel chains 14 in the transverse direction, the scrapers being at the same location, i.e. on the same line, in the longitudinal direction, form a scraper row 17. In the drawings, a scraper is shown as a bushing-like, rotatable structure, but within the scope of the invention it may also have some other form.

The parallel chains 14 are arranged to be movable in relation to each other at the same speed at least when the transport of sawn timbers is in progress. Each chain 14 of the scraper conveyor 10 is coupled to the drive apparatus 25 for moving the chain. Herein, the chains are driven by the common shafts 20. The transport of sawn timbers 100 is carried out on the upper level of the conveyor, where the scrapers are located above the chains. On the upper level, the conveyor includes guides 18, which guide the travel of the chains 14. During transport, each sawn timber 100 is supported on its side in the longitudinal direction of the sawn timber (the transverse direction of the conveyor) by a scraper row 17 formed by preferably at least two scrapers 16, wherein its support and transport are reliable. In the embodiment of Figs. 1 and 2, the scraper row 17 is formed by either four or eight scrapers 16, depending on the operating mode of the conveyor. According to the invention, the conveyor, more specifically, the scrapers 16 of the conveyor, can be positioned into different operating modes, in which the conveyor has a different number of scraper rows between its head end 10.1 and its tail end 10.2. Figs. 1 and 2 show the conveyor in its first operating mode. The shafts 20 are located at the ends 10.1, 10.2 of the conveyor, rotatably supported by the frame 12, and the shafts have sprockets 22 for the chains. A drive 24, such as an electric motor, is coupled to both shafts 20.

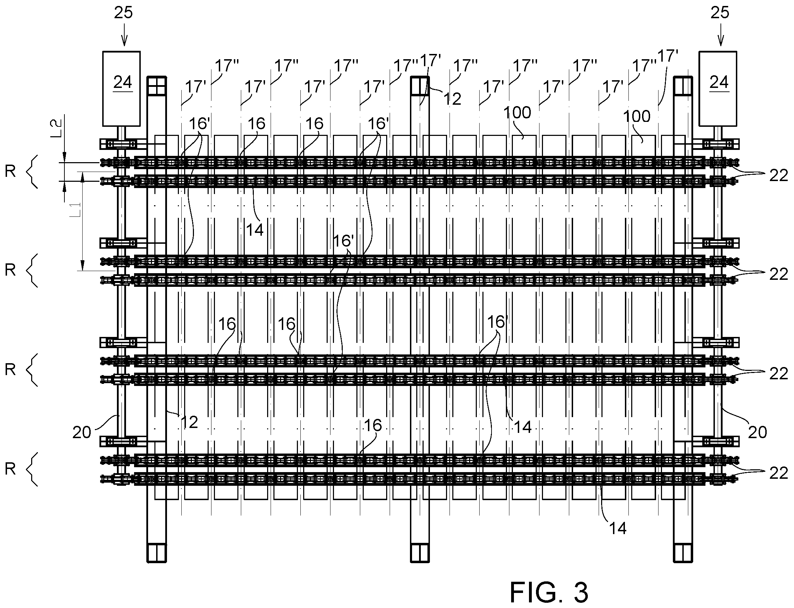

The chains of the scraper conveyor 10 are preferably arranged into groups R of adjacent chains in the transverse direction. In the embodiment shown in Fig. 2, a group includes two chains, i.e. they are arranged into pairs. In this arrangement, the distance L1 between groups R is greater than the distance L2 between the conveyor chains 14 within a group. The significance of this is explained in more detail below with reference to Fig. 3.

In a scraper conveyor 10 according to the invention, the conveyor chains 14 can be positioned into different longitudinal positions in relation to each other, which can also be called different phases. Positioning is carried out by rotating the selected chain links while the others are stationary. In this connection, the term scraper pair 16' is used, by which is meant any two scrapers in the same scraper row 17 that are adjacent in the transverse direction. The scrapers of the scraper pair 16' thus do not need to be on the adjacent chains 14. When contemplating the positioning in relation to each other of the conveyor chains 14 shown in Fig. 2, it is observed that the scrapers 16 of each scraper pair 16' are located on the adjacent chains. Fig. 3 shows such a positioning of the conveyor chains 14, where the scrapers of a scraper pair 16' are not located on the adjacent chains 14. Fig. 3 thus shows such a positioning of the chains in relation to each other that is called the second operating mode, in which each scraper pair 16' in each scraper row 17',17" is arranged such that, between the scraper pair 16', there is one chain 14 without a scraper belonging to said scraper row. In this manner, the conveyor chains can thus be positioned in relation to each other at least into a first operating mode and a second operating mode. The scraper of this chain is belonging to the second scraper row 17". By changing the operating mode, it is possible to select the number of scraper rows 17', 17" in use at each time. The scraper conveyor 10 itself is identical in Figs. 2 and 1, even though the scraper conveyor chains are positioned into a different operating mode. In the second operating mode, in the scraper rows 17', 17", at least one scraper pair composed of adjacent scrapers 16 and belonging to the scraper row is arranged such that, between the scrapers 16 of the scraper pair, there is at least one chain 14 without a scraper belonging to said scraper row, and in the first operating mode such that, in the scraper rows, each chain has a scraper.

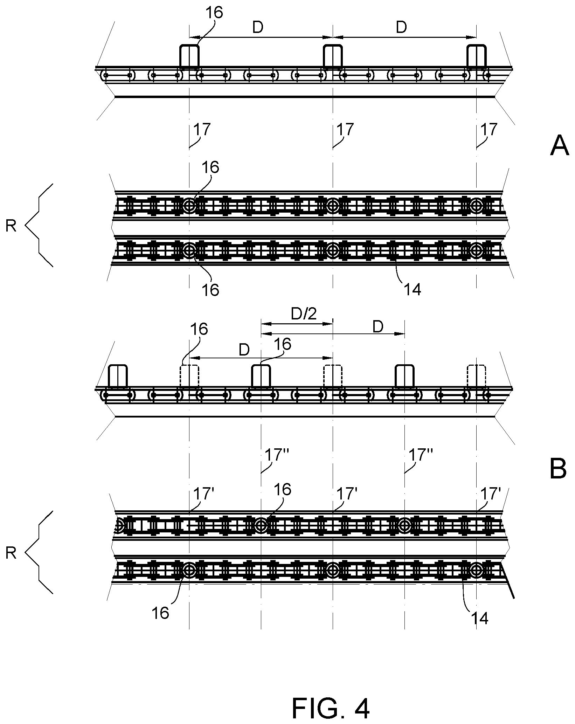

Fig. 4 shows in more detail the alternative positionings of the conveyor chains, i.e. operating modes according to one embodiment. Fig. 4 A shows lateral and top views of the positioning according to Fig. 2, which corresponds to the first operating mode, and Fig. 4 B shows lateral and top views of the positioning according to Fig. 3, which corresponds to the second operating mode. According to Fig. 4 A, when the scrapers on the adjacent chains in each group R are located in the same position, the distance of the scraper rows 17 is equal to the distance D from each other of consecutive scrapers in each of the chains 14 in the longitudinal direction. When group R includes 2 chains 14, and a change in the positioning of the chains is implemented, i.e. a phase displacement, then the position of the second chain in each chain pair is changed in relation to the other chain by a distance, which is preferably about half the distance between the consecutive scrapers on the same chain. Preferably, in practice, the aim is to provide approximately equally long distances between the scraper rows, although slight variation may be created, for example, due to clearances, tolerances or differences caused by the electronic control. Seen from Fig. 4 B is the second operating mode of the scraper conveyor, in which the position of the second chain of group R is deflected. Now scraper rows 17', 17" are formed in the scraper conveyor, the distance of which rows from each other is half the distance D between the consecutive scrapers in the longitudinal direction. At the same time, between each scraper pair is located one chain 14, which does not have a scraper 16 belonging to said scraper row.

More generally, if the number of chains in group R is N, and the distance between the consecutive scrapers on the same chain is D, the length of the phase displacement of each chain in relation to the chain of the previous group is preferably D/N. Naturally, there must remain a distance between the scraper rows 17',17", into which the sawn timber 100 to be transported fits. In other words, the group may include, for example, 3 chains, wherein there can be three different operating modes: 1. all the scrapers of the group in the same row; 2. two of the scrapers of the group in the same row and 1 scraper in the other row (this can also be implemented in 3 different manners, as the 1 scraper in the other scraper row may be any one of the three scrapers of the group); 3. all the scrapers of the group in different rows. In a corresponding manner, operation can also be created with groups R of four or even five chains.

The scraper drawn with a dashed line and a solid line in Fig. 4 B depicts that the scrapers are located on different chains. The scrapers in Fig. 4 B are located on every other chain 14 in each scraper row 17',17", and the scrapers in Fig. 4 A are located on every chain in each scraper row 17, but the number of scraper rows is less than in Fig. 4 A. Referring to Fig. 3, because the distance L1 between the chain pairs is greater than the distance L2 between the conveyor chains 14 of the pair, the support and push for each sawn timber 100, created by the scrapers for the sawn timber, remains relatively even in the longitudinal direction of the sawn timber, regardless of whether the first or the second running mode is used.

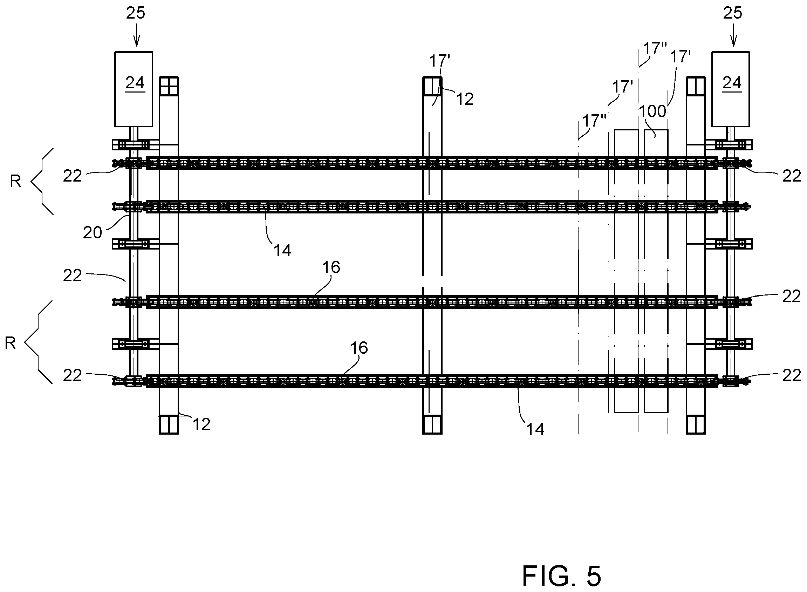

Fig. 5 shows schematically an embodiment with four parallel chains. In practice, it is safest to support each sawn timber by at least two scrapers, in order that operation is at least to some degree adequately reliable. The conveyor chains are set into the second operating mode and positioned in relation to each other such that, in the scraper rows 17', 17", a scraper pair composed of two adjacent scrapers belonging to the scraper row is arranged such that, between the scrapers of the scraper pair, there is one conveyor chain without a scraper belonging to said scraper row. Herein, the distance of the chains of the group R from each other deviates at opposite edges of the conveyor. In other words, the distance of the chains of the group from each other does not need to be constant.

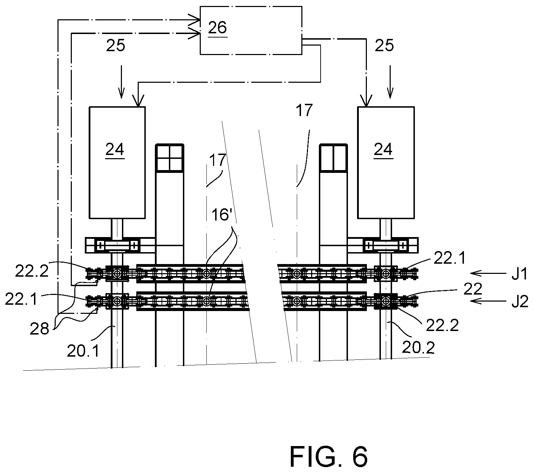

Each chain 14 of the scraper conveyor 10 is coupled to the drive apparatus 25 for moving the chain. Movement is carried out by the drive 24 and via the shaft 20 and the sprocket 22. The drive is preferably an electric motor. The drive apparatus 25 comprises an arrangement for changing the relative longitudinal positions of the chains. The drive apparatus 25 comprises an independently operating and settable drive apparatus for each type of group of chains (see Fig.2; J1, J2), which can be positioned into different positions in relation to each other. Figs. 1 - 6 show an embodiment with two of this type of group of chains. For this reason, the embodiments shown in these figures enable two different operating modes, i.e. positionings, i.e. numbers of scraper rows. Fig. 6 shows the drive apparatus 25 of the scraper conveyor of Figs. 1 and 2. The drive apparatus 25 comprises shafts 20, which support sprockets 22, through which the chain travels. At a minimum, the drive apparatus comprises at least a first and a second drive shaft (in Fig. 6; 20.1, 20.2), by means of which the chains are made to move in the conveyor by the shafts being rotated by the motor 24. For the purpose of clarity, shown herein is only a chain from each group of chains J1, J2. The chains are grouped in the transverse direction such that each group R includes one chain from each group of chains J1, J2.

The coupling of the sprockets to the shafts is arranged such that the first group of sprockets 22.1 is rotatably coupled to the first drive shaft 20.1 and force-transmittingly coupled to the second drive shaft 20.2, and the second group of sprockets 22.2 is rotatably coupled to the second drive shaft 20.2 and force-transmittingly coupled to the first drive shaft 20.1. If more than two shafts are used for guiding the chain, each chain 14 travels through only one such sprocket 22.2, which is force-transmittingly coupled to the drive shaft, while the other sprockets are freely rotatably fitted to the shaft.

Referring to Fig. 6, below is described an arrangement according to one embodiment of the invention for changing the relative positions of the chains. The chains are endless links and, in normal conveyor use, all chain links travel in synchrony guided by the sprockets. Changing the relative positions means that a portion of the chains is moved while the others are stationary. The scraper conveyor 10 comprises a control system 26, which is configured to control the operation of the motors 24. The control system 26 is communicatively connected to the motors in order to deliver the control signal to the motors. The apparatus includes, arranged in connection with each chain and/or sprocket, a position transmitter 28, which is communicatively connected to the control system 26. The control system comprises programmatic instructions creating a phase difference, which when run by the control system causes the relative longitudinal positions of the chains to change.

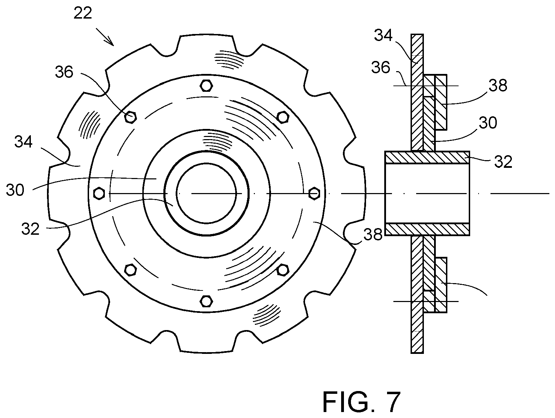

Fig. 7 depicts an arrangement according to another embodiment of the invention for changing the relative longitudinal positions of the chains. In this embodiment, the arrangement comprises a mechanical arrangement enabling phase difference. The sprocket 22, which is force-transmittingly coupled to the shaft, comprises a first wheel part 30, which is fixedly coupled, for example, by welding, to the sprocket hub 32. The sprocket 22 comprises a second wheel part 34, which is rotatably arranged around the hub 32 axially against the first wheel part 30. The second wheel part comprises a toothing on its outer circumference that is suitable for the chain. The diameter of the first wheel part 30 is significantly smaller than the diameter of the second wheel part 34. The second wheel part 34 is detachably locked to the first wheel part with a screw-fastened coupling flange 38. The coupling flange 38 is fastened with screws 36 to the second wheel part 34 such that the first wheel part 30 is pressed between the second wheel part 34 and the coupling flange 38, wherein, as the screws are being tightened, the second wheel part 34 is immovably coupled to the first wheel part 30 and the hub 32. When there is a desire to change the relative positions of the chains, the screws 36 are loosened and the second wheel part 34 is rotated in relation to the hub 32 and the first wheel part 30. Fig. 7 shows only one embodiment, in which it is relatively simply possible to mechanically change the position of a single chain in relation to the other chains. The coupling of the first wheel part 30 to the second wheel part can also be implemented, for example, by a combination of suitably arranged holes and pegs.

The scraper conveyor operates such that sawn timbers 100 are distributed to the conveyor at the first end 10.1 and passed forward from the second end 10.2 of the conveyor. The sawn timbers are distributed at such a speed that it corresponds to the speed of the conveyor such that in front of each scraper row 17 (in the direction of travel) is brought one sawn timber 100. The moment of distribution for each sawn timber is such that each sawn timber 100 is placed between two scrapers 16 in the longitudinal direction of the conveyor, wherein the sawn timber 100 settles against the latter of the scrapers 16 in the direction of transport. To achieve a given target capacity, which is defined as the number of sawn timbers per a unit of time, a given chain speed of the conveyor is required. When the conveyor is in its first operating mode, increasing the capacity requires increasing the chain speed and/or distributing more sawn timbers to be pushed by the same scraper row, which, among other things, increases the risk of instability in the sawn timber transport. When according to the invention is switched into the second operating mode by increasing the number of scraper rows, by repositioning the chains in relation to each other, a comparable capacity is achieved with a chain speed that is reduced by one half, or correspondingly, with the same chain speed, twice the speed as would be achieved with the conveyor in the first operating mode.

The figures show the basic idea, in which the sawn timbers are supported from below. Within the scope of the invention it is, however, possible to implement the conveyor such that transport is carried out below the chain links. In this case, below the conveyor are required separate sawn timber support guides, which extend from one end of the conveyor to the other and, in this case, the scrapers must also be so tall that they extend from the chain to the upper surface of said support guides, and thus are able to transport sawn timbers on top of the support guides.

It should be noted that only some of the most preferred embodiments of the invention have been described above. Thus, it is to be understood that the invention is not limited to the above embodiments, but may be practiced in many ways within the scope defined by the appended claims.

### List of reference numerals

scraper conveyor 10
first end of the conveyor 10.1
second end of the conveyor 10.2.
frame 12
chain 14
scraper 16
scraper pair 16'
scraper row 17, 17', 17"
guide 18
shaft 20
first shaft 20.1
second shaft 20.2
sprocket 22
first group of sprockets 22.1
second group of sprockets 22.2
drive 24
drive apparatus 25
control system 26
position transmitter 28
first wheel part 30
hub 32
second wheel part 34
sawn timber 100

## Claims

1. A scraper conveyor (10) for transverse transport of sawn timbers, comprising parallel chains (14), which are arranged in normal use to be moved at the same speed in relation to each other, on which chains (14) are arranged conveyor scrapers (16), forming, in relation to the longitudinal direction of the chains (14), transverse scraper rows (17,17',17") at a predetermined distance from each other in the longitudinal direction, **characterized in that** the number of scraper rows (17,17',17") on the conveyor can be changed by positioning the chains (14) into different positions in relation to each other.

2. A scraper conveyor (10) according to claim 1, **characterized in that** each chain (14) of the scraper conveyor is coupled to a drive apparatus for moving the chain, and that the drive apparatus comprises an arrangement for changing the relative positions of the chains.

3. A scraper conveyor (10) according to claim 1, **characterized in that** the positioning comprises a first operating mode, in which, in the scraper rows (17,17',17"), each chain (14) has a scraper (16), and a second operating mode, in which, in the scraper rows (17,17',17"), at least one scraper pair (16') belonging to the scraper row is arranged on the conveyor chains (14) such that, between the scrapers of the scraper pair (16'), there is at least one conveyor chain (14) without a scraper (16) belonging to said scraper row.

4. A scraper conveyor (10) according to claim 3, **characterized in that** in the first operating mode, the conveyor chains (14) can be positioned in relation to each other such that, in the scraper rows (17,17',17"), at least two scraper pairs (16') belonging to the scraper row are arranged such that, between the scraper pair (16'), there is at least one chain (14) without a scraper (16) belonging to said scraper row (17,17',17").

5. A scraper conveyor (10) according to any one of the preceding claims, **characterized in that** the scraper conveyor (10) comprises at least a first scraper row (17,17',17") and a second scraper row (17,17',17"), in which scraper rows the scrapers (16) are arranged, in the first operating mode, on every other chain (14) in the transverse direction.

6. A scraper conveyor (10) according to any one of the preceding claims, **characterized in that** the chains (14) of the scraper conveyor are arranged into groups (R) in the transverse direction such that the distance between the groups is greater than the distance between the chains in the group, and that, in each group, in the second operating mode, there are only fewer scrapers than chains (14) at one scraper row.

7. A scraper conveyor (10) according to claim 6, **characterized in that** the chains (14) of the scraper conveyor are arranged into pairs in the transverse direction such that the distance between the pairs is greater than the distance between the chains (14) of the pair, and that each pair includes just one conveyor scraper (16) at one scraper row (17,17',17").

8. A scraper conveyor (10) according to claim 2, **characterized in that** the arrangement for changing the relative longitudinal positions of the chains (14) comprises a mechanical arrangement enabling phase difference.

9. A scraper conveyor (10) according to claim 2, **characterized in that** the arrangement for changing the relative longitudinal positions of the chains (14) comprises, in connection with a drive (24) controller included in the drive apparatus (25), programmatic instructions creating a phase difference, which when run by the control system included in the controller, causes the relative longitudinal positions of the chains (14) to change.

10. A scraper conveyor (10) according to any one of the preceding claims, **characterized in that** it comprises at least a first and a second drive shaft adapted to move the chains (14), and sprockets (22) supported by the shafts (20), wherein a first group of sprockets (22.1) is rotatably coupled to the first drive shaft and force-transmittingly coupled to the second drive shaft (20), and a second group of sprockets (22.2) is rotatably coupled to the second drive shaft and force-transmittingly coupled to the first drive shaft (20).

11. A method for transporting sawn timbers by a scraper conveyor (10), comprising parallel chains (14), which are arranged in normal use to be moved at the same speed in relation to each other, on which chains (14) are arranged conveyor scrapers (16), forming, in relation to the longitudinal direction of the chains (14), transverse scraper rows (17,17',17") at a predetermined distance from each other in the longitudinal direction, in the scraper conveyor, **characterized in that**, in the method, the number of scraper rows (17,17',17") on the conveyor is changed by positioning the chains (14) into different positions in relation to each other.

12. A method according to claim 11, **characterized in that**, in the method, the conveyor is used such that an individual sawn timber is supported during transport by such a number of scrapers, which is less than the number of parallel chains (14), or such that an individual sawn timber is supported during transport by such a number of scrapers (16), which is equal to the number of parallel chains (14).

## Patentansprüche

1. Kratzförderer (10) zum Quertransport von Schnitthölzern, der parallele Ketten (14) umfasst, die im normalen Gebrauch angeordnet sind, um bei derselben Geschwindigkeit in Bezug zueinander bewegt zu werden, wobei auf diesen Ketten (14) Förderkratzer (16) angeordnet sind, die in Bezug zu der Längsrichtung der Ketten (14) in Querrichtung Kratzerreihen (17, 17', 17") in einem vorgegebenen Abstand voneinaeinander in der Längsrichtung bilden, **dadurch gekennzeichnet, dass** die Anzahl der Kratzerreihen (17, 17', 17") auf dem Förderer verändert werden kann, indem die Ketten (14) in verschiedenen Positionen in Bezug zueinander positioniert werden.

2. Kratzförderer (10) nach Anspruch 1, **dadurch gekennzeichnet, dass** jede Kette (14) des Kratzförderers mit einer Antriebsvorrichtung gekoppelt ist, um die Kette zu bewegen, und dass die Antriebsvorrichtung eine Anordnung umfasst, um die relativen Positionen der Ketten zu verändern.

3. Kratzförderer (10) nach Anspruch 1, **dadurch gekennzeichnet, dass** das Positionieren einen ersten Betriebsmodus umfasst, in dem in den Kratzerreihen (17, 17', 17") jede Kette (14) einen Kratzer (16) aufweist, und einen zweiten Betriebsmodus umfasst, in dem in den Kratzerreihen (17, 17', 17") mindestens ein Kratzerpaar (16'), das zu der Kratzerreihe gehört, auf den Förderketten (14) derart angeordnet ist, dass es zwischen den Kratzern des Kratzerpaares (16') mindestens eine Fördrkette (14) ohne einen Kratzer (16), der zu der Kratzerreihe gehört, gibt.

4. Kratzförderer (10) nach Anspruch 3, **dadurch gekennzeichnet, dass** in dem ersten Betriebsmodus die Fördrketten (14) in Bezug zueinander derart positioniert werden können, dass in den Kratzerreihen (17, 17', 17") mindestens zwei Kratzerpaare (16'), die zu der Kratzerreihe gehören, derart angeordnet sind, dass es zwischen dem Kratzerpaar (16') mindestens eine Kette (14) ohne einen Kratzer (16), der zu der Kratzerreihe (17, 17', 17") gehört, gibt.

5. Kratzförderer (10) nach einem der vorhergehenden Ansprüche, **dadurch gekennzeichnet, dass** der Kratzförderer (10) mindestens eine erste Kratzerreihe (17, 17', 17") und eine zweite Kratzerreihe (17, 17', 17") umfasst, in denen Kratzerreihen des Kratzers (16) in dem ersten Betriebsmodus auf jeder anderen Kette (14) in der Querrichtung angeordnet sind.

6. Kratzförderer (10) nach einem der vorhergehenden Ansprüche, **dadurch gekennzeichnet, dass** die Ketten (14) des Kratzförderers in Gruppen (R) in der Querrichtung derart angeordnet sind, dass der Abstand zwischen den Gruppen größer als der Abstand zwischen den Ketten in der Gruppe ist, und dass sich in dem zweiten Betriebsmodus in jeder Gruppe nur weniger Kratzer als Ketten (14) in einer Kratzerreihe befinden.

7. Kratzförderer (10) nach Anspruch 6, **dadurch gekennzeichnet, dass** die Ketten (14) des Kratzförderers in Paaren in der Querrichtung derart angeordnet sind, dass der Abstand zwischen den Paaren größer als der Abstand zwischen den Ketten (14) des Paares ist, und dass jedes Paar gerade einen Förderkratzer (16) in einer Kratzerreihe (17, 17', 17") enthält.

8. Kratzförderer (10) nach Anspruch 2, **dadurch gekennzeichnet, dass** die Anordnung, um die relativen Längspositionen der Ketten (14) zu verändern, eine mechanische Anordnung umfasst, die eine Phasendifferenz ermöglicht.

9. Kratzförderer (10) nach Anspruch 2, **dadurch gekennzeichnet, dass** die Anordnung, um die relativen Längspositionen der Ketten (14) zu verändern, in Verbindung mit einer Antriebseinheit (24), die in det Antriebsvorrichtung (25) enthalten ist, Programmanweisungen umfasst, die eine Phasendifferenz erzeugen, die, wenn sie von dem Steuersystem, das in der Steuereinheit enthalten ist, ausgeführt wird, veranlasst, die relativen Längspositionen der Ketten (14) zu verändern.

10. Kratzförderer (10) nach einem der vorhergehenden Ansprüche, **dadurch gekennzeichnet, dass** er mindestens eine erste und eine zweite Antriebswelle, die darauf ausgelegt sind, die Ketten (14) zu bewegen, und Kettenräder (22), die von den Wellen (20) getragen werden, umfasst, wobei eine erste Gruppe von Kettenrädern (22.1) mit der ersten Antriebswelle drehbar gekoppelt ist und kraftübertragend mit der zweiten Antriebswelle (20) gekoppelt ist, und wobei eine zweite Gruppe von Kettenrädern (22.2) mit der zweiten Antriebswelle drehbar gekoppelt ist und kraftübertragend mit der ersten Antriebswelle (20) gekoppelt ist.

11. Verfahren zum Transportieren von Schnitthölzern durch einen Kratzförderer (10), der parallele Ketten (14) umfasst, die im normalen Gebrauch angeordnet sind, um bei derselben Geschwindigkeit in Bezug zueinander bewegt zu werden, wobei auf diesen Ketten (14) Förderkratzer (16) angeordnet sind, die in Bezug zu der Längsrichtung der Ketten (14) in Querrichtung Kratzerreihen (17, 17', 17") in einem vorgegebenen Abstand voneinaeinander in der Längsrichtung in dem Kratzförderer bilden, **dadurch gekennzeichnet, dass** in dem Verfahren die Anzahl der Kratzerreihen (17, 17', 17") auf dem Förderer verändert wird, indem die Ketten (14) in verschiedenen Positionen in Bezug zueinander positioniert werden.

12. Verfahren nach Anspruch 11, **dadurch gekennzeichnet, dass** in dem Verfahren der Förderer derart verwendet wird, dass ein einzelnes Schnittholz während des Transports durch solch eine Anzahl von Kettenrädern getragen wird, die kleiner als die Anzahl von parallelen Ketten (14) ist, oder derart, dass ein einzelnes Schnittholz während des Transports durch solch eine Anzahl von Kratzern (16) getragen wird, die gleich der Anzahl von parallelen Ketten (14) ist.

## Revendications

1. Convoyeur à raclettes (10) pour le transport transversal de pièces de bois sciées, comprenant des chaînes (14) parallèles, lesquelles sont conçues pour être déplacées à la même vitesse l'une par rapport à l'autre lors d'une utilisation normale, des raclettes de convoyeur (16) étant agencées sur lesdites chaînes (14), lesquelles forment, par rapport à la direction longitudinale des chaînes (14), des rangées de raclettes (17, 17', 17") transversales à une distance prédéterminée les unes des autres dans la direction longitudinale, **caractérisé en ce que** le nombre de rangées de raclettes (17, 17', 17") sur le convoyeur peut être modifié en positionnant les chaînes (14) dans différentes positions les unes par rapport aux autres.

2. Convoyeur à raclettes (10) selon la revendication 1, **caractérisé en ce que** chaque chaîne (14) du convoyeur à raclettes est accouplée à un dispositif d'entraînement pour le déplacement de la chaîne, et **en ce que** le dispositif d'entraînement comprend un système destiné à modifier les positions relatives des chaînes.

3. Convoyeur à raclettes (10) selon la revendication 1, **caractérisé en ce que** le positionnement comprend un premier mode de fonctionnement, dans lequel, dans les rangées de raclettes (17, 17', 17"), chaque chaîne (14) comporte une raclette (16), et un deuxième mode de fonctionnement, dans lequel, dans les rangées de raclettes (17, 17', 17"), au moins une paire de raclettes (16') appartenant à la rangée de raclettes est agencée sur les chaînes de convoyeur (14) de telle façon qu'au moins une chaîne de convoyeur (14) sans une raclette (16) appartenant à ladite rangée de raclettes se trouve entre les raclettes de la paire de raclettes (16').

4. Convoyeur à raclettes (10) selon la revendication 3, **caractérisé en ce que** dans le premier mode de fonctionnement, les chaînes de convoyeur (14) peuvent être positionnées les unes par rapport aux autres de telle façon que dans les rangées de raclettes (17, 17', 17"), au moins deux paires de raclettes (16') appartenant à la rangée de raclettes sont agencées de telle façon qu'au moins une chaîne (14) sans une raclette (16) appartenant à ladite rangées de raclettes (17, 17', 17") se trouve entre la paire de raclettes (16').

5. Convoyeur à raclettes (10) selon l'une quelconque des revendications précédentes, **caractérisé en ce que** le convoyeur à raclettes (10) comprend au moins une première rangée de raclettes (17, 17', 17") et une deuxième rangée de raclettes (17, 17', 17"), les raclettes (16) dans lesdites rangées de raclettes étant agencées sur une chaîne (14) sur deux dans la direction transversale dans le premier mode de fonctionnement.

6. Convoyeur à raclettes (10) selon l'une quelconque des revendications précédentes, **caractérisé en ce que** les chaînes (14) du convoyeur à raclettes sont agencées en groupes (R) dans la direction transversale, de telle façon que la distance entre les groupes est supérieure à la distance entre les chaînes dans le groupe, et **en ce que** dans chaque groupe, dans le deuxième mode de fonctionnement, il est prévu moins de raclettes que de chaînes (14) au niveau d'une rangée de raclettes.

7. Convoyeur à raclettes (10) selon la revendication 6, **caractérisé en ce que** les chaînes (14) du convoyeur à raclettes sont agencées par paires dans la direction transversale, de telle façon que la distance entre les paires est supérieure à la distance entre les chaînes (14) de la paire, et **en ce que** chaque paire inclut seulement une raclette de convoyeur (16) au niveau d'une rangée de raclettes (17, 17', 17").

8. Convoyeur à raclettes (10) selon la revendication 2, **caractérisé en ce que** le système destiné à modifier les positions longitudinales relatives des chaînes (14) comprend un système mécanique permettant une différence de phase.

9. Convoyeur à raclettes (10) selon la revendication 2, **caractérisé en ce que** le système destiné à modifier les positions longitudinales relatives des chaînes (14) comprend, en connexion avec le contrôleur d'entraînement (24) inclus dans le dispositif d'entraînement (25), des instructions de programmation créant une différence de phase, lesquelles produisent la modification des positions longitudinales relatives des chaînes (14) lorsqu'elles sont exécutées par le système de contrôle inclus dans le contrôleur.

10. Convoyeur à raclettes (10) selon l'une quelconque des revendications précédentes, **caractérisé en ce que** celui-ci comprend au moins un premier et un deuxième arbre d'entraînement adaptés pour déplacer les chaînes (14), et des pignons (22) supportés par les arbres (20), dans lequel un premier groupe de pignons (22.1) est accouplé de façon rotative au premier arbre d'entraînement et accouplé avec transmission de force au deuxième arbre d'entraînement (20), et un deuxième groupe de pignons (22.2) est accouplé de façon rotative au deuxième arbre d'entraînement et accouplé avec transmission de force au premier arbre d'entraînement (20).

11. Procédé de transport de pièces de bois sciées par un convoyeur à raclettes (10), comprenant des chaînes (14) parallèles, lesquelles sont conçues pour être déplacées à la même vitesse les unes par rapport aux autres lors d'une utilisation normale, des raclettes de convoyeur (16) étant agencées sur lesdites chaînes (14), lesquelles forment, par rapport à la direction longitudinale des chaînes (14), des rangées de raclettes (17, 17', 17") transversales à une distance prédéterminée les unes des autres dans la direction longitudinale, **caractérisé en ce que** dans le procédé, le nombre de rangées de raclettes (17, 17', 17") sur le convoyeur est modifié en positionnant les chaînes (14) dans différentes positions les unes par rapport aux autres.

12. Procédé selon la revendication 11, **caractérisé en ce que** dans le procédé, le convoyeur est utilisé de telle façon qu'une pièce de bois sciée individuelle est supportée pendant le transport par un certain nombre de raclettes, lequel est inférieur au nombre de chaînes (14) parallèles, ou de telle façon qu'une pièce de bois sciée individuelle est supportée pendant le transport par un certain nombre de raclettes (16), lequel est égal au nombre de chaînes (14) parallèles.
